# EUROPÄISCHE PATENTSCHRIFT

(11) **EP 3 601 961 B1**
(45) Veröffentlichungstag und Bekanntmachung des Hinweises auf die Patenterteilung: **13.09.2023**
(21) Anmeldenummer: 18709310.9
(22) Anmeldetag: 28.02.2018
(51) Int. Cl.: G01F 1/60, G01F 1/58

(54) **VERFAHREN ZUM BETREIBEN EINES MAGNETISCH-INDUKTIVEN DURCHFLUSSMESSGERÄTS UND MAGNETISCH-INDUKTIVES DURCHFLUSSMESSGERÄT**
METHOD OF OPERATING A MAGNETO-INDUCTIVE FLOWMETER AND MAGNETO-INDUCTIVE FLOWMETER
PROCÉDÉ D'OPÉRATION D'UN DÉBITMÈTRE ÉLECTROMAGNÉTIQUE ET DÉBITMÈTRE ÉLECTROMAGNÉTIQUE

(30) Priorität: 20.03.2017 DE 102017105959
(43) Veröffentlichungstag der Anmeldung: 05.02.2020
(73) Patentinhaber: Endress+Hauser Flowtec AG, 4153 Reinach (CH)
(72) Erfinder: SCHMALZRIED, Frank, 81827 München (DE)
(74) Vertreter: Penner, Paul
(86) Internationale Anmeldenummer: PCT/EP2018/054926
(87) Internationale Veröffentlichungsnummer: WO 2018/172028

(56) Entgegenhaltungen:
- DE-A1-102012 106 926
- DE-T2- 69 821 474
- US-A- 4 597 295

## Beschreibung

Die Erfindung betrifft ein Verfahren zum Betreiben eines magnetisch-induktiven Durchflussmessgeräts zur Messung der Durchflussgeschwindigkeit oder des Volumendurchflusses eines Mediums in einem Messrohr sowie ein magnetisch-induktives Messgerät.

Magnetisch-induktive Durchflussmessgeräte sind seit langem Stand der Technik und werden zur Durchflussmessung bei verschiedenen Medien eingesetzt, welche durch ein Messrohr strömen. Das Messprinzip basiert auf der Trennung von bewegten Ladungsträgern des Mediums in einem Magnetfeld, wodurch eine durchflussabhängige elektrische Spannung entsteht, welche durch Messelektroden abgegriffen werden kann und Rückschlüsse auf den Durchfluss des Mediums durch das Messrohr strömenden Mediums zulässt.

Diese durchflussabhängige elektrische Spannung ist aber auch durch elektrochemische Störeffekte an den Grenzflächen Messelektrode - Medium beeinflusst, welche die Durchflussmessung erschwert, da die Störeffekte elektrische Spannungen verursachen können, welche unter Umständen betragsmäßig mehrere Größenordnungen größer sein kann, als die durch den Durchfluss bedingte elektrische Spannung. Eine Durchflussmessung umfasst dabei bei den meisten Geräten eine Messung einer Differenz zweier Elektrodenspannungen, welche Elektrodenspannungen bei unterschiedlichen Magnetfeldern gemessen wurden. Um diese Elektrodenspannungen korrekt messen zu können, ist es zwingend notwendig, dass die Elektrodenspannungen innerhalb eines Arbeitsbereichs einer die Elektrodenspannungen interpretierenden Schaltung bleiben. Ohne eine Korrektur der Störeffekte ist man gezwungen, einen sehr weiten Arbeitsbereich zu wählen, womit die Genauigkeit der Messungen der elektrischen Spannung gering und Messfehler von Durchflussmesswerten groß sind. Um diesem Problem zu begegnen, lehrt die DE3537752A1 eine analoge elektronische Schaltung, welche die Messelektrodensignale durch eine Rückkopplung korrigiert. Jedoch erfordert die Lehre das Einrichten von Kompensationsintervallen, welche sich störend auf die Leistungsfähigkeit des Durchflussmessgeräts auswirken. Eine Alternativlösung wird durch die DE102012106926A1 vorgeschlagen. Hierbei werden Messelektrodensignale durch eine Kompensationsspannung in den Arbeitsbereich einer die Signale interpretierenden Schaltung gebracht, wobei die Kompensationsspannung aus einer geringen Anzahl vorgegebener diskreter Spannungswerte ausgewählt wird. Diese Vorgehensweise funktioniert allerdings nur dann, wenn sichergestellt ist, dass die Störspannungsschwankungen nur in einem relativ begrenzten Spannungsbereich stattfinden. Darüber hinaus ist die Lehre darauf ausgerichtet, dass Zeiträume von Störspannungsänderungen groß sind im Vergleich zu Messintervallen von Spannungsmessungen.

Die DE69821474T2 beschreibt ein Verfahren, bei welchem ein Gleichspannungspegel eines nachfolgenden Messfensters mittels eines Algorithmus basierend auf Gleichspannungspegeln vorhergehender Messfenster vorausgesagt wird.

Die Schrift US 4 597 295 A offenbart ein Verfahren, bei dem die Elektrodenspannung zur Ermittlung einer Störspannung herangezogen wird.

Die Aufgabe der Erfindung ist es daher, ein Verfahren zum Betreiben eines magnetisch-induktiven Durchflussmessgeräts sowie ein solches Durchflussmessgerät vorzuschlagen, wobei eine leistungsfähigere Durchflussmessung und eine bessere und umfangreichere Störeffektkompensation ermöglicht wird.

Die Aufgabe wird gelöst durch ein Verfahren gemäß dem unabhängigen Anspruch 1 und einem magnetisch-induktiven Durchflussmessgerät gemäß dem Anspruch 9.

Bei einem erfindungsgemäßen Verfahren zur Messung der Durchflussgeschwindigkeit oder des Volumendurchflusses eines Mediums in einem Messrohr,
wird das Medium während einer Speisephase mittels mindestens eines Spulensystems eines Magnetsystems mit einem Magnetfeld einer ersten Polarität beaufschlagt, welches Magnetfeld im Wesentlichen senkrecht zu einer Messrohrachse steht, wobei das Magnetfeld durch Anlegen einer elektrischen Spulenspannung an das Spulensystem hervorgerufen wird, wobei die Speisephase eine Messphase mit im Wesentlichen konstantem Magnetfeld aufweist;
wobei eine im Medium durch das Magnetfeld induzierte durchflussabhängige elektrische Elektrodenspannung durch mindestens zwei Messelektroden abgegriffen und von einer Ausgabeeinheit ausgegeben wird;
wobei ein Magnetfeld einer nachfolgenden, insbesondere anschließenden Speisephase eine zur ersten Polarität umgekehrte zweite Polarität aufweist;
wobei die Elektrodenspannung einer Verstärkereinheit zugeführt wird, wobei eine verstärkte Elektrodenspannung einem ersten Analog/Digitalwandler zugeführt wird;
wobei die Elektrodenspannung während der Messphase zur Ermittlung einer Störspannung herangezogen wird, wobei die Störspannung kompensiert wird,
wobei die Störspannung mittels einer digitalen Berechnungsschaltung ermittelt wird, und wobei die Störspannung für jede Speisephase nachgeregelt wird,
wobei zur Ermittlung der Störspannung die Elektrodenspannung der Messphase der der Speisephase vorangehenden oder nachfolgenden Speisephase, insbesondere der der Speisephase nächsten vorangehenden oder nächste nachfolgende Speisephase herangezogen wird, wobei die digitale Berechnungsschaltung einen Tiefpassfilter aufweist. Die Kompensation der Elektrodenspannung wird dabei vor Zuführung der Elektrodenspannung zur Verstärkereinheit (53) mittels einer Addier/Subtrahiereinheit (52) durchgeführt, welche Addier/ Subtrahiereinheit (52) einen ersten Signaleingang für die Elektrodenspannung und einen zweiten Signaleingang für einen Wert der ermittelten Störspannung aufweist.

Der Tiefpassfilter ist dazu eingerichtet, die sich langsam ändernde Störspannung von den sich schnell, aufgrund von Magnetfeldwechseln bei Speisephasenwechsel ändernden Elektrodenspannungen zu trennen. Das digitale Tiefpassfilter wertet eine Anzahl, insbesondere eine gerade Anzahl von Elektrodenspannungen aufeinanderfolgender Messphasen aus, um einen Wert einer momentanen Störspannung zu bestimmen. Beispielsweise kann das Tiefpassfilter ein Mittelwertfilter sein. Beispielsweise kann ein gewichtetes Mittel berechnet werden, wobei ein Verlauf von Werten eines Filterkerns des Tiefpassfilters dem Verlauf einer Funktion bzw. Verteilung folgen, wobei die Funktion bzw. Verteilung beispielsweise eine aus folgender Liste ist: Gaußfunktion, Binomialverteilung. Der technische Vorgang des Filterns entspricht dabei einer Faltung einer Serie von Elektrodenspannungen mit dem Filterkern der verwendeten Filterfunktion.

Durch Kombination von Werten mehrerer Elektrodenspannungen, insbesondere von Elektrodenspannungen von Speisephasen mit Magnetfeldern verschiedener Polarität kann die Störspannung genauer bestimmt werden.

In einer Ausgestaltung des Verfahrens ist ein Verstärkungsfaktor der Verstärkereinheit einstellbar, und wobei nach Kompensation der Störspannung ein Wert einer Differenz der verstärkten Elektrodenspannung der Speisephase und der verstärkten Elektrodenspannung der nachfolgenden Speisephase mindestens 10% und insbesondere mindestens 20% und bevorzugt mindestens 30% eines Eingangsspannungsbereich des ersten Analog/Digitalwandlers abdeckt. Durch ein Aufspannen der Differenz der verstärkten Elektrodenspannungen über mindestens 10% oder insbesondere mindestens 20% oder bevorzugt mindestens 30% des Eingangsbereichs des ersten Analog/Digitalwandlers vermindert sich das Quantisierungsrauschen der durch den ersten Analog/Digitalwandler ausgegebenen digitalen Spannungswerte.

In einer Ausgestaltung des Verfahrens werden bei der Ermittlung der Störspannung die Elektrodenspannungen von mindestens vier und insbesondere mindestens sechs und bevorzugt mindestens acht Speisephasen herangezogen.

In einer Ausgestaltung des Verfahrens werden bei der Ermittlung der Störspannung die Elektrodenspannungen von höchstens zwanzig und insbesondere höchstens sechzehn und bevorzugt höchstens zwölf Speisephasen herangezogen.

In einer Ausgestaltung des Verfahrens ist bei der Ermittlung der Störspannung die Anzahl der berücksichtigten Elektrodenspannungen anpassbar. Insbesondere bei einer schnellen Änderung der Störspannung kann eine Verringerung der Anzahl vorteilhaft sein, um eine schnellere Anpassung der Kompensation der Störspannung zu gewährleisten.

In einer Ausgestaltung des Verfahrens wird der Berechnungsschaltung die durch den ersten Analog/Digitalwandler digitalisierte Elektrodenspannung zugeführt.

In einer Ausgestaltung des Verfahrens wird der Berechnungsschaltung die durch die Ausgabeeinheit ausgegebene und durch einen zweiten Analog/Digitalwandler digitalisierte Elektrodenspannung zugeführt.

In einer Ausgestaltung des Verfahrens wird ein die Störspannung repräsentierendes Ausgangssignal der Berechnungsschaltung einem Digital/Analogwandler zugeführt wird, welcher Digital/Analogwandler mit dem zweiten Signaleingang der Summiereinheit verbunden ist.

Ein erfindungsgemäßes magnetisch-induktives Durchflussmessgerät zur Umsetzung des Verfahrens nach einem vorigen Ansprüche umfasst:
Ein Messrohr;
ein Magnetsystem mit mindestens einem Spulensystem zur Erzeugung eines Magnetfelds im Messrohr, wobei das Magnetfeld im Wesentlichen senkrecht zu einer Messrohrachse steht; Mindestens ein Paar Messelektroden zum Abgreifen einer durch das Magnetfeld induzierten durchflussabhängigen elektrischen Elektrodenspannung;
Eine elektronische Mess/Betriebsschaltung, welche dazu eingerichtet ist, das Magnetsystem zu betreiben und die Elektrodenspannung auszuwerten,
wobei die elektronische Mess-/Betriebsschaltung eine digitale Berechnungsschaltung aufweist, welche dazu eingerichtet ist, eine Störspannung zu ermitteln,
wobei die Mess-/Betriebsschaltung dazu eingerichtet ist, die Störspannung zu kompensieren. Dabei weist die digitale Berechnungsschaltung einen Tiefpassfilter auf. Zudem weist die digitale Berechnungsschaltung eine Addier/Subtrahiereinheit mit einem ersten Signaleingang für die Elektrodenspannung und einem zweiten Signaleingang für einen Wert der ermittelten Störspannung auf.

In einer Ausgestaltung des Durchflussmessgeräts weist die Mess-/Betriebsschaltung einen Verstärker sowie einen ersten Analog/Digitalwandler auf,
wobei der Verstärker dazu eingerichtet ist, die Elektrodenspannung zu verstärken und dem ersten Analog/Digitalwandler zuzuführen,
und wobei der erste Analog/Digitalwandler dazu eingerichtet ist, die Elektrodenspannung zu digitalisieren und der digitalen Berechnungsschaltung sowie einer Messdatenverarbeitung zuzuführen.

In einer Ausgestaltung des Durchflussmessgeräts weist die Mess-/Betriebsschaltung eine Verstärkereinheit sowie einen ersten Analog/Digitalwandler, sowie einen zweiten Analog/Digitalwandler auf,
wobei die Verstärkereinheit dazu eingerichtet ist, die Elektrodenspannung zu verstärken und dem ersten Analog/Digitalwandler zuzuführen,
und wobei der erste Analog/Digitalwandler dazu eingerichtet ist, die Elektrodenspannung zu digitalisieren und einer Messdatenverarbeitung zuzuführen,
wobei der zweite Analog/Digitalwandler dazu eingerichtet ist, die durch die Ausgabeeinheit ausgegebene Elektrodenspannung zu digitalisieren und der digitalen Berechnungsschaltung zuzuführen.

In einer Ausgestaltung des Durchflussmessgeräts ist ein Ausgang der Summiereinheit mit einem Eingang des Verstärkers verbunden.

In einer Ausgestaltung des Durchflussmessgeräts ist zwischen Summiereinheit und Berechnungsschaltung ein Digital/Analogwandler angeordnet.

In einer Ausgestaltung des Durchflussmessgeräts weist die Mess-/Betriebsschaltung eine übergeordnete Einheit auf, welche dazu eingerichtet ist, die Verstärkung der Elektrodenspannung durch die Verstärkereinheit sowie die Abschwächung der Störspannung durch den Abschwächer zu steuern,
wobei die übergeordnete Einheit des Weiteren dazu eingerichtet ist, der digitalen Berechnungsschaltung sowie der Messdatenverarbeitung den Verstärkungsfaktor zu übermitteln.

Im Folgenden wird die Erfindung anhand von Ausführungsbeispielen beschrieben.
Fig. 1 zeigt einen beispielhaften schematischen Verlauf einer elektrischen Elektrodenspannung.
Fig. 2 zeigt ein schematisches erfindungsgemäßes Verfahren zum Betreiben eines erfindungsgemäßen Durchflussmessgeräts;
Fig. 3 zeigt eine beispielhafte schematische Ausgestaltungen einer elektronischen Mess-/Betriebsschaltung eines erfindungsgemäßen Durchflussmessgeräts.
Fig. 4 zeigt eine alternative Ausgestaltung der Mess-/Betriebselektronik.
Fig. 5 skizziert einen beispielhaften Querschnitt durch ein erfindungsgemäßes magnetisch-induktives Durchflussmessgerät.

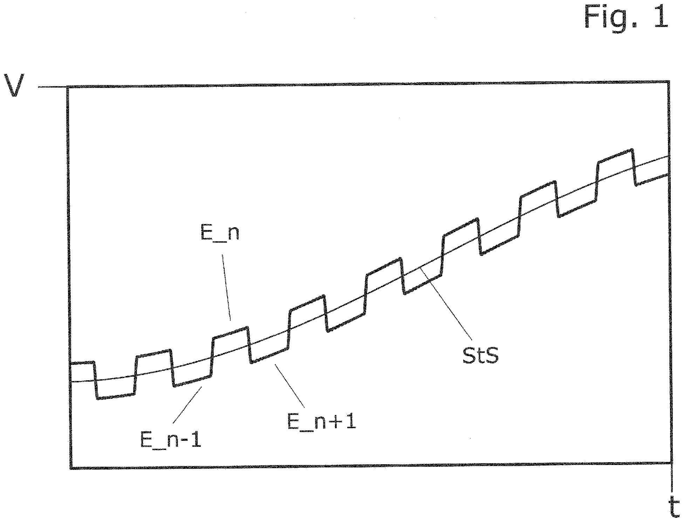

Fig. 1 zeigt einen vergrößerten Ausschnitt eines beispielhaften Verlaufs einer durch zwei Messelektroden eines magnetisch-induktiven Durchflussmessgeräts abgegriffenen Elektrodenspannung. Ein magnetisch-induktives Durchflussmessgerät weist üblicherweise ein Messrohr, ein Magnetsystem mit mindestens einem Spulensystem zur Erzeugung eines Magnetfelds im Messrohr, welches Magnetfeld im Wesentlichen senkrecht zu einer Messrohrachse steht; mindestens ein Paar Messelektroden zum Abgreifen der durch das Magnetfeld induzierten durchflussabhängigen elektrischen Elektrodenspannung; und eine elektronische Mess-/Betriebsschaltung auf, welche elektronische Mess-/Betriebsschaltung dazu eingerichtet ist, das Magnetsystem zu betreiben und die Elektrodenspannung auszuwerten, um aus der Auswertung der Elektrodenspannung Durchflussmesswerte zu gewinnen. Üblicherweise wechselt das erzeugte Magnetfeld mit Speisephasenwechsel seine Polarität.

Der in Fig. 1 gezeigte Verlauf der Elektrodenspannung einzelner Speisephasen ist stark vereinfacht und berücksichtigt nicht, dass eine Speisephase eine Überspannungsphase und eine Messphase umfasst, wobei in der Überspannungsphase eine Überspannung an das Spulensystem angelegt wird, um schneller in einen Sollzustand mit im Wesentlichen konstantem Magnetfeld einzuschwingen, welcher Sollzustand Grundlage für die Messphase ist. Die Elektrodenspannung ändert beim Wechseln zwischen Speisephasen ihren Wert, falls das Magnetfeld bei einer nachfolgenden Speisephase einen anderen Wert oder andere Polarität aufweist, wobei drei beispielhafte Elektrodenspannungen aufeinanderfolgender Speisephasen E_n-1, E_n und E_n+1 gekennzeichnet sind. Die Berechnung von Durchflussmesswerten basiert auf der Auswertung der Differenz zwischen den gemessenen Elektrodenspannungen zweier insbesondere aufeinanderfolgender Speisephasen.

In einem Idealfall, in welchem die Elektrodenspannung ausschließlich vom Magnetfeld und dem Durchfluss abhinge, würde die Elektrodenspannung um einen Nullpunkt herum ausschlagen.

Praktisch treten jedoch Störeffekte auf, welche beispielsweise durch elektrochemische Effekte an den Grenzflächen hervorgerufen sein können. Diese Störeffekte verursachen eine Störspannung StS, welche Störspannung StS um zwei bis fünf Größenordnungen größer sein kann, als eine Spannungsdifferenz der Elektrodenspannungen zwischen einer Speisephase und einer nachfolgenden Speisephase. Beispielsweise können Beträge der Spannungsdifferenz in einem ersten Bereich von 0 mV bis zu einigen mV und Beträge der Störspannung in einem zweiten Bereich von 0 mV bis mehreren 100 mV sein. Die Störspannung kann über einen Zeitraum, welcher groß gegenüber der Zeitdauer einer einzelnen Speisephase ist über den gesamten zweiten Bereich schwanken. Typischerweise dauert eine Speisephase wenige Millisekunden bis eine Sekunde. Die Störeffekte sind aufgrund der im Vergleich zu den Spannungsdifferenzen betragsmäßig potentiell deutlich größeren Spannungswerten problematisch für eine Durchflussmessung. Üblicherweise wird bei einem magnetisch-induktiven Durchflussmessgerät die Elektrodenspannung an einen ersten Analog/Digitalwandler angelegt, um eine digitale Signalverarbeitung zu ermöglichen. Analog/Digitalwandler weisen einen eingangsseitig einen Eingangsspannungsbereich auf, welcher erste Spannungsbereich ausgangsseitig auf eine gewisse Anzahl von darstellbaren diskreten Spannungswerten abgebildet wird. Die analogen Elektrodenspannungen werden somit durch digitale Spannungswerte repräsentiert. Für eine Durchflussmessung wird eine Spannungsdifferenz von Elektrodenspannungen von Messphasen aufeinanderfolgender Speisephasen herangezogen. Ein Analog/Digitalwandler auf dessen Eingangsspannungsbereich ein kompletter Bereich möglicher Elektrodenspannungen abgebildet wird, hat eine schlechte Auflösung für geringe Spannungsdifferenzen, was zu einem störenden Quantisierungsrauschen beim Erfassen von Spannungsdifferenzen führt.

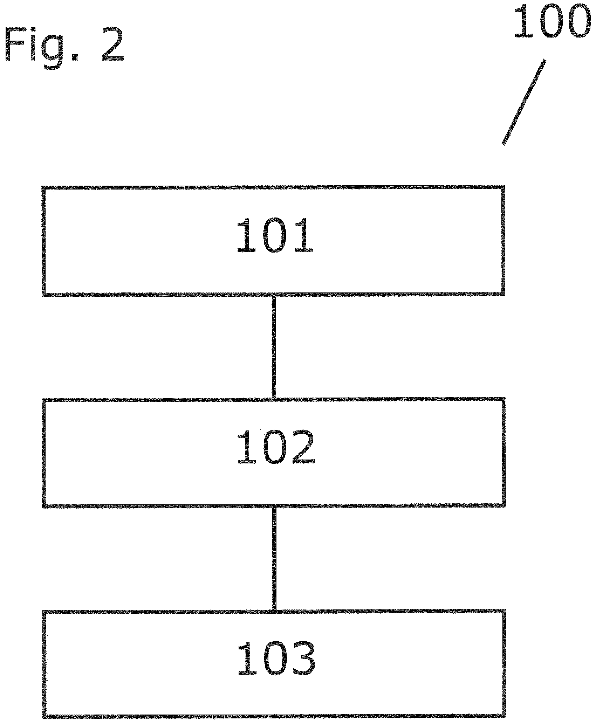

Fig. 2 skizziert ein Verfahren 100, bei welchem das Quantisierungsrauschen vermindert wird, wobei in einem ersten Verfahrensschritt 101 ein Wert der durch die Störeffekte verursachten Störspannung StS ermittelt wird, wobei in einem zweiten Verfahrensschritt 102 die Störspannung kompensiert wird, und wobei in einem dritten Verfahrensschritt 103 die Spannungsdifferenz von Elektrodenspannungen aufeinanderfolgender Messphasen an den Eingangsspannungsbereich des ersten Analog/Digitalwandlers angepasst wird. Die Ermittlung der Störspannung geschieht über eine digitale Berechnungsschaltung, welche ein digitales Tiefpassfilter aufweist. Das digitale Tiefpassfilter wertet eine Anzahl, insbesondere eine gerade Anzahl von Elektrodenspannungen aufeinanderfolgender Messphasen aus, um einen Wert einer momentanen Störspannung zu bestimmen. Beispielsweise kann das Tiefpassfilter ein Mittelwertfilter sein. Beispielsweise kann ein gewichtetes Mittel berechnet werden, wobei ein Verlauf von Werten eines Filterkerns des Tiefpassfilters dem Verlauf einer Funktion bzw. Verteilung folgen, wobei die Funktion bzw. Verteilung eine aus folgender Liste ist: Gaußfunktion, Binomialverteilung. Die Verteilung kann auch über ein numerisches Filterentwurfsverfahren bestimmt sein.

Nach Bestimmung der Störspannung wird die Störspannung bzw. der Anteil der Störspannung an der Elektrodenspannung kompensiert, so dass die Elektrodenspannung nach Verstärkung mit einer Verstärkereinheit an einen Eingang des ersten Analog/Digitalwandlers angelegt wird. Die Kompensation findet also mittels einer Rückkopplung der Störung auf die Elektrodenspannung statt.

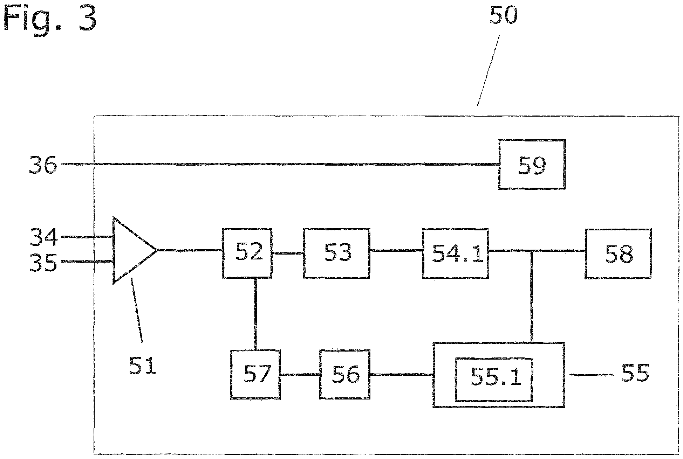

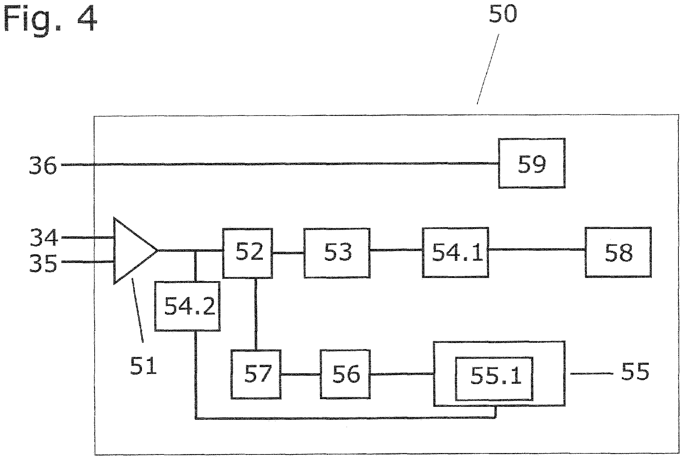

Fig. 3 zeigt eine beispielhafte Ausgestaltung der Mess-/Betriebselektronik 50, welche eine Ausgabeeinheit 51 zum Erfassen und Ausgeben der Elektrodenspannung, eine Addier/Subtrahiereinheit 52, eine Verstärkereinheit 53, einen ersten Analog/Digitalwandler 54.1, eine digitale Berechnungsschaltung 55 mit einem digitalen Tiefpassfilter 55.1, einen Digital/Analogwandler 56, einen Abschwächer 57, einer Messdatenverarbeitung 58 und eine übergeordnete Einheit 59 aufweist. Die Ausgabeeinheit 51 erfasst über Leitungen 34 und 35 die elektrischen Potentiale der in Fig. 4 gezeigten Messelektroden 31, 32 und gibt die Potentialdifferenz als eine Elektrodenspannung aus, auf welche Elektrodenspannung ein Störsignal addiert bzw. subtrahiert wird. Die Verstärkereinheit 53 ist dazu eingerichtet, die von der Addier/Subtrahiereinheit 52 ausgegebende modifzierte Elektrodenspannung so zu verstärken, dass ein Wert einer Differenz der verstärkten Elektrodenspannung der Speisephase und der verstärkten Elektrodenspannung der nachfolgenden Speisephase mindestens 10% und insbesondere mindestens 20% und bevorzugt mindestens 30% Eingangsspannungsbereich des ersten Analog/Digitalwandlers abdeckt. Ein gewählter Verstärkungsfaktor bleibt dabei über zumindest eine Speisephase konstant. Der erste Analog/Digitalwandler 54.1 übersetzt die analoge Elektrodenspannung in einen digitalen Spannungswert, welcher der Messdatenverarbeitung 58 sowie der digitalen Berechnungsschaltung 55 zugeführt wird. In einer alternativen Ausgestaltung kann die digitale Berechnungsschaltung 55 auch Teil der Messdatenverarbeitung 58 sein. Nach Ermittlung eines Werts der Störspannung mittels des digitalen Tiefpassfilters 55.1 wird der digitale Wert der Störspannung mittels eines Digital/Analogwandlers 56 in eine analoge Spannung übersetzt, und durch den Abschwächer 57 mit einem zum Verstärkungsfaktor inversen Abschwächungsfaktor abgeschwächt. Die abgeschwächte Störspannung wird der Addier/Subtrahiereinheit 52 zugeführt, welche das von der Ausgabeeinheit 51 zugeführte Elektrodensignal um die abgeschwächte Störspannung korrigiert. Bei Änderung des Durchflusses kann es notwendig sein, den Verstärkungsfaktor der Verstärkereinheit zu ändern, um sicherzustellen, dass der Wert der Differenz der verstärkten Elektrodenspannung der Speisephase und der verstärkten Elektrodenspannung der nachfolgenden Speisephase einerseits innerhalb des Eingangsspannungsbereichs des ersten Analog/Digitalwandlers bleibt und andererseits mindestens 10% und insbesondere mindestens 20% und bevorzugt mindestens 30% des Eingangsspannungsbereich abdeckt. Die übergeordnete Einheit 59 steuert den Verstärkungsfaktor der Verstärkereinheit 53 und übermittelt den Verstärkungsfaktor an die Messdatenverarbeitung 58, die digitale Berechnungsschaltung 55 und den Abschwächer 57, damit diese die erhaltenen digitalen Spannungswerte korrekt interpretieren. Um eine unübersichtliche Grafik zu vermeiden, wurde in Fig. 3 auf das Zeigen von elektronischen Verbindungen zwischen der übergeordneten Einheiten 59 und mit ihr verbundenen Elementen verzichtet. Die Messdatenverarbeitung ermittelt einen momentanen Durchflussmesswert auf Basis einer Spannungsdifferenz der Elektrodenspannungen zweier Messphasen, so dass ein aktueller Verstärkungsfaktor bei der Interpretation der entsprechenden digitalen Spannungswerte bekannt sein muss. Die Messdatenverarbeitung 58 kann einen Bandpassfilter aufweisen, um restliche, durch die digitale Berechnungsschaltung nicht kompensierte Störspannungsanteile zumindest teilweise zu kompensieren. In gleicher Weise berücksichtigt auch die digitale Berechnungsschaltung 55 bei der Berechnung der Störspannung den zum eingehenden digitalen Spannungswert gehörenden Verstärkungsfaktor. Beim Berechnen der Störspannung über das digitale Tiefpassfilter wird eine gewisse Anzahl von digitalen Spannungswerten unter Berücksichtigung der entsprechenden Verstärkungsfaktoren verwendet. In einer Ausgestaltung ist die Anzahl der verwendeten digitalen Spannungswerte anpassbar, um beispielsweise bei einer schnellen Störspannungsänderung eine bessere Reaktionszeit der Störspannungskompensation durch Verringerung der Anzahl der verwendeten Spannungswerte zu erreichen. Die übergeordnete Einheit 59 ist des Weiteren dazu eingerichtet, das Magnetsystem anzusteuern.

Fig. 4 zeigt eine alternative Ausgestaltung der Mess-/Betriebselektronik 50, wobei die Mess-/Betriebsschaltung im Unterschied zur in Fig. 3 beschriebenen Ausgestaltung einen zweiten Analog/Digitalwandler 54.2 aufweist, wobei der Berechnungsschaltung 55 die durch die Ausgabeeinheit 51 ausgegebene und durch einen zweiten Analog/Digitalwandler 54.2 digitalisierte Elektrodenspannung zugeführt wird.

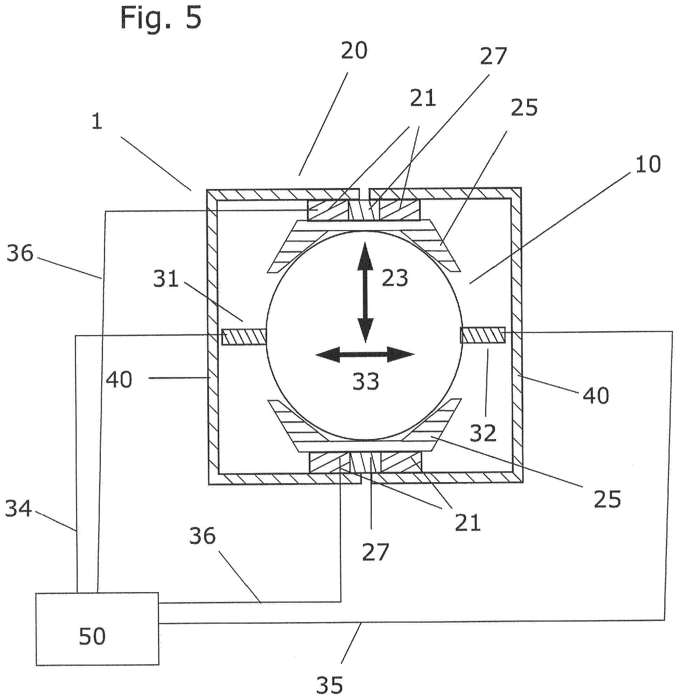

Fig. 5 skizziert einen beispielhaften Querschnitt durch ein erfindungsgemäßes magnetisch-induktives Durchflussmessgerät 1 mit einem Messrohr 10; einem Magnetsystem 20 mit Spulensystemen 21 mit jeweils einem Spulenkern 27, einem Polschuh 25; sowie Messelektroden 31 und 32 zum Erfassen einer im Medium induzierten Spannung. Das Magnetsystem beaufschlagt das Medium im Messrohr 10 mit einem Magnetfeld, welches in Richtung des Pfeils 23 ausgerichtet ist. Das Magnetfeld sowie der Fluss des Mediums durch das Messrohr sorgen für das Entstehen einer Elektrodenspannung in Richtung des Pfeils 33. Das magnetisch-induktive Durchflussmessgerät kann des Weiteren eine Feldrückführung 40 umfassen. Die Messelektroden 31, 32 sowie die Spulensysteme 21 sind mit der Mess-/Betriebsschaltung 50 über Leitungen 34, 35, 36 verbunden, welche Mess-/Betriebsschaltung 50 dazu eingerichtet ist, das Magnetsystem sowie die Messelektroden zu betreiben. Die Polschuhe 25 sind dazu eingerichtet, eine möglichst homogene Verteilung des Magnetfelds über den Messrohrquerschnitt zu gewährleisten.

### Bezugszeichenliste

- 1: magnetisch-induktives Durchflussmessgerät
- 10: Messrohr
- 20: Magnetsystem
- 21: Spulensystem
- 23: Richtung des Magnetfelds
- 25: Polschuh
- 27: Spulenkern
- 31, 32: Messelektrode
- 33: Richtung der Elektrodenspannung
- 34, 35: Verbindung der Messelektrode mit Mess-/Betriebsschaltung
- 36: Verbindung des Magnetsystems mit Mess-/Betriebsschaltung
- 40: Feldrückführung
- 50: Mess-/Betriebsschaltung
- 51: Ausgabeeinheit
- 52: Addier/Subtrahiereinheit
- 53: Verstärkereinheit
- 54.1: erster Analog/Digitalwandler
- 54.2: zweiter Analog/Digitalwandler
- 55: digitale Berechnungseinheit
- 55.1: digitales Filter
- 56: Digital/Analogwandler
- 57: Abschwächer
- 58: Messdatenverarbeitung
- 59: übergeordnete Einheit
- 100: Verfahren
- 101: erster Verfahrensschritt
- 102: zweiter Verfahrensschritt
- 103: dritter Verfahrensschritt
- E_n: Elektrodenspannung einer Speisephase
- E_n+1: Elektrodenspannung einer nachfolgenden Speisephase
- E_n-1: Elektrodenspannung einer vorhergehenden Speisephase
- StS: Störspannung

## Patentansprüche

1. Verfahren zum Betreiben eines magnetisch-induktiven Durchflussmessgeräts (1) zur Messung der Durchflussgeschwindigkeit oder des Volumendurchflusses eines Mediums in einem Messrohr (10),
wobei das Medium während einer Speisephase mittels mindestens eines Spulensystems (21) eines Magnetsystems (20) mit einem Magnetfeld einer ersten Polarität beaufschlagt wird, welches Magnetfeld im Wesentlichen senkrecht zu einer Messrohrachse steht, wobei das Magnetfeld durch Anlegen einer elektrischen Spulenspannung an das Spulensystem (21) hervorgerufen wird, wobei die Speisephase eine Messphase mit im Wesentlichen konstantem Magnetfeld aufweist;
wobei eine im Medium durch das Magnetfeld induzierte durchflussabhängige elektrische Elektrodenspannung durch mindestens zwei Messelektroden abgegriffen und von einer Ausgabeeinheit (51) ausgegeben wird;
wobei ein Magnetfeld einer nachfolgenden, insbesondere anschließenden Speisephase eine zur ersten Polarität umgekehrte zweite Polarität aufweist;
wobei die Elektrodenspannung einer Verstärkereinheit (53) zugeführt wird, wobei eine verstärkte Elektrodenspannung einem ersten Analog/Digitalwandler (54.1) zugeführt wird;
wobei die Elektrodenspannung während der Messphase herangezogen wird, um in einem ersten Verfahrensschritt (101) eine Störspannung (StS) zu ermitteln,
wobei die Störspannung in einem zweiten Verfahrensschritt (102) kompensiert wird,
wobei die Störspannung (StS) mittels einer digitalen Berechnungsschaltung (55) ermittelt wird, wobei die Störspannung für jede Speisephase nachgeregelt wird,
wobei zur Ermittlung der Störspannung die Elektrodenspannung der Messphase einer der Speisephase vorangehenden oder nachfolgenden, insbesondere einer nächsten vorangehenden oder nächsten nachfolgenden Speisephase herangezogen wird,
wobei die digitale Berechnungsschaltung (55) einen Tiefpassfilter (55.1) aufweist,
wobei die Kompensation der Elektrodenspannung vor Zuführung der Elektrodenspannung zur Verstärkereinheit (53) mittels einer Addier/Subtrahiereinheit (52) durchgeführt wird, welche Addier/Subtrahiereinheit (52) einen ersten Signaleingang für die Elektrodenspannung und einen zweiten Signaleingang für einen Wert der ermittelten Störspannung aufweist.

2. Verfahren nach Anspruch 1,
wobei ein Verstärkungsfaktor der Verstärkereinheit (53) einstellbar ist, und wobei nach Kompensation der Störspannung ein Wert einer Differenz der verstärkten Elektrodenspannung der Speisephase und der verstärkten Elektrodenspannung der nachfolgenden Speisephase mindestens 10% und insbesondere mindestens 20% und bevorzugt mindestens 30% eines Eingangsspannungsbereich des ersten Analog/Digitalwandlers abdeckt.

3. Verfahren nach einem der vorigen Ansprüche,
wobei bei der Ermittlung der Störspannung die Elektrodenspannungen von mindestens vier und insbesondere mindestens sechs und bevorzugt mindestens acht Speisephasen herangezogen werden.

4. Verfahren nach einem der vorigen Ansprüche,
wobei bei der Ermittlung der Störspannung die Elektrodenspannungen von höchstens zwanzig und insbesondere höchstens sechzehn und bevorzugt höchstens zwölf Speisephasen herangezogen werden.

5. Verfahren nach einem der vorigen Ansprüche,
wobei bei der Ermittlung der Störspannung (StS) die Anzahl der berücksichtigten Elektrodenspannungen anpassbar ist.

6. Verfahren nach einem der vorigen Ansprüche,
wobei der Berechnungsschaltung (55) die durch den ersten Analog/Digitalwandler (54.1) digitalisierte Elektrodenspannung zugeführt wird.

7. Verfahren nach einem der Ansprüche 1 bis 6,
wobei der Berechnungsschaltung (55) die durch die Ausgabeeinheit (51) ausgegebene und durch einen zweiten Analog/Digitalwandler (54.2) digitalisierte Elektrodenspannung zugeführt wird.

8. Verfahren nach einem der vorigen Ansprüche,
wobei ein die Störspannung repräsentierendes Ausgangssignal der digitalen Berechnungsschaltung (55) einem Digital/Analogwandler (56) zugeführt wird, welcher Digital/Analogwandler mit dem zweiten Signaleingang der Addier/Subtrahiereinheit (52) verbunden ist.

9. Magnetisch-induktives Durchflussmessgerät (1) eingerichtet zur Umsetzung des Verfahrens nach einem der vorigen Ansprüche umfassend:
Ein Messrohr (10);
ein Magnetsystem (20) mit mindestens einem Spulensystem (21) zur Erzeugung eines Magnetfelds im Messrohr (10), wobei das Magnetfeld im Wesentlichen senkrecht zu einer Messrohrachse steht;
Mindestens zwei Messelektroden (31, 32) zum Abgreifen einer durch das Magnetfeld induzierten durchflussabhängigen elektrischen Elektrodenspannung;
Eine Ausgabeeinheit (51) zum Erfassen und Ausgeben der durch die Messelektroden abgegriffenen Elektrodenspannung;
Eine elektronische Mess-/Betriebsschaltung (50), welche dazu eingerichtet ist, das Magnetsystem (20) zu betreiben und die Elektrodenspannung zur Bestimmung von Durchflussmesswerten auszuwerten,
wobei die elektronische Mess-/Betriebsschaltung (50) eine digitale Berechnungsschaltung (55) aufweist, welche dazu eingerichtet ist, eine Störspannung zu ermitteln,
wobei die Mess-/Betriebsschaltung (50) dazu eingerichtet ist, die Störspannung zu kompensieren,
wobei die digitale Berechnungsschaltung (55) einen Tiefpassfilter (55.1) aufweist,
wobei die digitale Berechnungsschaltung (55) eine Addier/Subtrahiereinheit (52) aufweist und dazu eingerichtet ist, die Kompensation der
Elektrodenspannung vor Zuführung der Elektrodenspannung zur Verstärkereinheit (53) mittels der Addier/Subtrahiereinheit (52) durchzuführen, wobei die Addier/Subtrahiereinheit (52) einen ersten Signaleingang für die Elektrodenspannung und einen zweiten Signaleingang für einen Wert der ermittelten Störspannung aufweist.

10. Magnetisch-induktives Durchflussmessgerät (1) nach Anspruch 9,
wobei die Mess-/Betriebsschaltung (50) eine Verstärkereinheit (53) sowie einen ersten Analog/Digitalwandler (54.1) aufweist,
wobei die Verstärkereinheit (53) dazu eingerichtet ist, die Elektrodenspannung zu verstärken und dem ersten Analog/Digitalwandler (54.1) zuzuführen,
und wobei der erste Analog/Digitalwandler (54.1) dazu eingerichtet ist, die Elektrodenspannung zu digitalisieren und der digitalen Berechnungsschaltung (55) sowie einer Messdatenverarbeitung (58) zuzuführen.

11. Magnetisch-induktives Durchflussmessgerät (1) nach Anspruch 9,
wobei die Mess-/Betriebsschaltung (50) eine Verstärkereinheit (53) sowie einen ersten Analog/Digitalwandler (54.1), sowie einen zweiten Analog/Digitalwandler (54.2) aufweist,
wobei die Verstärkereinheit (53) dazu eingerichtet ist, die Elektrodenspannung zu verstärken und dem ersten Analog/Digitalwandler (54.1) zuzuführen,
und wobei der erste Analog/Digitalwandler (54.1) dazu eingerichtet ist, die Elektrodenspannung zu digitalisieren und einer Messdatenverarbeitung (58) zuzuführen,
wobei der zweite Analog/Digitalwandler (54.2) dazu eingerichtet ist, die durch die Ausgabeeinheit (51) ausgegebene Elektrodenspannung zu digitalisieren und der digitalen Berechnungsschaltung zuzuführen.

12. Magnetisch-induktives Durchflussmessgerät (1) nach Anspruch 11,
wobei die Mess-/Betriebsschaltung des Weiteren einen Digital/Analogwandler (56) und bevorzugt einen Abschwächer (57) aufweist, welche zwischen Addier/Subtrahiereinheit (52) und Berechnungsschaltung angeordnet sind.

13. Magnetisch-induktives Durchflussmessgerät (1) nach einem der vorigen Ansprüche 9 bis 12,
wobei die Mess-/Betriebsschaltung (50) eine übergeordnete Einheit (59) aufweist, welche dazu eingerichtet ist, die Verstärkung der Elektrodenspannung durch die Verstärkereinheit (53) sowie die Abschwächung der Störspannung durch den Abschwächer (57) zu steuern,
wobei die übergeordnete Einheit (59) des Weiteren dazu eingerichtet ist, der digitalen Berechnungsschaltung (55) sowie der Messdatenverarbeitung (58) den Verstärkungsfaktor zu übermitteln.

## Claims

1. A method for operating a magneto-inductive flowmeter (1) for measuring the flow velocity or the volume flow of a medium in a measuring tube (10),
wherein, during a supply phase, the medium is supplied by means of at least one coil system (21) of a magnet system (20) with a magnetic field of a first polarity, which magnetic field is essentially perpendicular to a measuring tube axis, wherein the magnetic field is generated by applying an electrical coil voltage to the coil system (21), wherein the supply phase has a measurement phase with an essentially constant magnetic field;
wherein a flow-dependent electric electrode voltage induced in the medium by the magnetic field is tapped by at least two measuring electrodes and output by an output unit (51);
wherein a magnetic field of a following, in particular subsequent, supply phase has a second polarity opposite to the first polarity;
wherein the electrode voltage is supplied to an amplifier unit (53), wherein an amplified electrode voltage is supplied to a first analog/digital converter (54.1);
wherein, during the measurement phase, in a first method step (101), the electrode voltage is used to ascertain a disturbance voltage (StS),
wherein, in a second method step (102), the disturbance voltage is compensated for,
wherein the disturbance voltage (StS) is ascertained by means of a digital calculation circuit (55), wherein the disturbance voltage is readjusted for each supply phase,
wherein the electrode voltage of the measurement phase of a supply phase preceding or following the supply phase, in particular a next preceding or next following supply phase, is used to ascertain the disturbance voltage,
wherein the digital calculation circuit (55) has a low-pass filter (55.1),
wherein the compensation of the electrode voltage is carried out before the electrode voltage is supplied to the amplifier unit (53) by means of an adding/subtracting unit (52), which adding/subtracting unit (52) has a first signal input for the electrode voltage and a second signal input for a value of the ascertained disturbance voltage.

2. The method as claimed in claim 1,
wherein an amplification factor of the amplifier unit (53) can be adjusted, and wherein, after the disturbance voltage has been compensated for, a value of a difference of the amplified electrode voltage of the supply phase and the amplified electrode voltage of the following supply phase covers at least 10% and in particular at least 20% and preferably at least 30% of an input voltage range of the first analog/digital converter.

3. The method as claimed in one of the preceding claims,
wherein the electrode voltages of at least four and in particular at least six and preferably at least eight supply phases are used when ascertaining the disturbance voltage.

4. The method as claimed in one of the preceding claims,
wherein the electrode voltages of at most twenty and in particular at most sixteen and preferably at most twelve supply phases are used when ascertaining the disturbance voltage.

5. The method as claimed in one of the preceding claims,
wherein the number of electrode voltages taken into consideration when ascertaining the disturbance voltage (StS) is adjustable.

6. The method as claimed in one of the preceding claims,
wherein the electrode voltage digitized by the first analog/digital converter (54.1) is supplied to the calculation circuit (55).

7. The method as claimed in one of claims 1 to 6,
wherein the electrode voltage output by the output unit (51) and digitized by a second analog/digital converter (54.2) is supplied to the calculation circuit (55).

8. The method as claimed in one of the preceding claims,
wherein an output signal of the digital calculation circuit (55) representing the disturbance voltage is supplied to a digital/analog converter (56), which digital/analog converter is connected to the second signal input of the adding/subtracting unit (52).

9. A magneto-inductive flowmeter (1) constructed to convert the method as claimed in one of the preceding claims comprising:
a measuring tube (10);
a magnet system (20) with at least one coil system (21) for generating a magnetic field in the measuring tube (10), wherein the magnetic field is essentially perpendicular to a measuring tube axis;
at least two measuring electrodes (31, 32) for tapping a flow-dependent electric electrode voltage induced by the magnetic field;
an output unit (51) for detecting and outputting the electrode voltage tapped by the measuring electrodes;
an electronic measuring/operating circuit (50) which is constructed to operate the magnet system (20) and to evaluate the electrode voltage in order to determine flow measurement values,
wherein the electronic measuring/operating circuit (50) has a digital calculation circuit (55) which is constructed to ascertain a disturbance voltage,
wherein the measuring/operating circuit (50) is constructed to compensate for the disturbance voltage, wherein the digital calculation circuit (55) has a low-pass filter (55.1),
wherein the digital calculation circuit (55) has an adding/subtracting unit (52) and is constructed to carry out the compensation of the electrode voltage before the electrode voltage is supplied to the amplifier unit (53) by means of the adding/subtracting unit (52), wherein the adding/subtracting unit (52) has a first signal input for the electrode voltage and a second signal input for a value of the ascertained disturbance voltage.

10. The magneto-inductive flowmeter (1) as claimed in claim 9,
wherein the measuring/operating circuit (50) has an amplifier unit (53) and a first analog/digital converter (54.1),
wherein the amplifier unit (53) is constructed to amplify the electrode voltage and to supply it to the first analog/digital converter (54.1),
and wherein the first analog/digital converter (54.1) is constructed to digitize the electrode voltage and to supply it to the digital calculation circuit (55) and a measurement data processor (58).

11. The magneto-inductive flowmeter (1) as claimed in claim 9,
wherein the measuring/operating circuit (50) has an amplifier unit (53) and a first analog/digital converter (54.1), and a second analog/digital converter (54.2),
wherein the amplifier unit (53) is constructed to amplify the electrode voltage and to supply it to the first analog/digital converter (54.1),
and wherein the first analog/digital converter (54.1) is constructed to digitize the electrode voltage and to supply it to a measurement data processor (58),
wherein the second analog/digital converter (54.2) is constructed to digitize the electrode voltage output by the output unit (51) and to supply it to the digital calculation circuit.

12. The magneto-inductive flowmeter (1) as claimed in claim 11,
wherein the measuring/operating circuit also has a digital/analog converter (56) and preferably an attenuator (57) which are arranged between adding/subtracting unit (52) and calculation circuit.

13. The magneto-inductive flowmeter (1) as claimed in one of preceding claims 9 to 12,
wherein the measuring/operating circuit (50) has a superordinated unit (59) which is constructed to control the amplification of the electrode voltage by the amplifier unit (53) and the attenuation of the disturbance voltage by the attenuator (57),
wherein the superordinated unit (59) is also constructed to transmit the amplification factor to the digital calculation circuit (55) and to the measurement data processor (58).

## Revendications

1. Procédé destiné à l'exploitation d'un débitmètre électromagnétique (1) destiné à la mesure de la vitesse d'écoulement ou du débit volumique d'un produit s'écoulant dans un tube de mesure (10),
le produit étant soumis à un champ magnétique d'une première polarité pendant une phase d'alimentation au moyen d'au moins un système de bobines (21) d'un système magnétique (20), lequel champ magnétique est pour l'essentiel perpendiculaire à un axe de tube de mesure, le champ magnétique étant provoqué par l'application d'une tension électrique de bobine au système de bobines (21), la phase d'alimentation présentant une phase de mesure avec un champ magnétique pour l'essentiel constant ;
une tension électrique d'électrode dépendant du débit, induite dans le produit par le champ magnétique, étant prélevée par au moins deux électrodes de mesure et délivrée par une unité de sortie (51) ;
un champ magnétique d'une phase d'alimentation suivante, notamment consécutive, présentant une deuxième polarité inversée par rapport à la première polarité ;
la tension d'électrode étant acheminée à une unité d'amplification (53), une tension d'électrode amplifiée étant acheminée à un premier convertisseur analogique/numérique (54.1) ;
la tension d'électrode étant utilisée pendant la phase de mesure pour déterminer une tension parasite (StS) dans une première étape de procédé (101),
la tension parasite étant compensée dans une deuxième étape de procédé (102), la tension parasite (StS) étant déterminée au moyen d'un circuit de calcul numérique (55), la tension parasite étant réajustée pour chaque phase d'alimentation,
la tension d'électrode de la phase de mesure d'une phase d'alimentation précédant ou suivant la phase d'alimentation, notamment d'une phase d'alimentation suivante précédant ou suivant immédiatement la phase d'alimentation, étant utilisée pour déterminer la tension parasite,
le circuit de calcul numérique (55) comportant un filtre passe-bas (55.1),
la compensation de la tension d'électrode étant effectuée avant l'acheminement de la tension d'électrode à l'unité d'amplification (53) au moyen d'une unité d'addition/de soustraction (52), laquelle unité d'addition/de soustraction (52) présente une première entrée de signal pour la tension d'électrode et une deuxième entrée de signal pour une valeur de la tension parasite déterminée.

2. Procédé selon la revendication 1,
pour lequel un facteur d'amplification de l'unité d'amplification (53) est réglable, et pour lequel, après compensation de la tension parasite, une valeur d'une différence entre la tension d'électrode amplifiée de la phase d'alimentation et la tension d'électrode amplifiée de la phase d'alimentation suivante couvre au moins 10 % et notamment au moins 20 % et de préférence au moins 30 % d'une gamme de tension d'entrée du premier convertisseur analogique/numérique.

3. Procédé selon l'une des revendications précédentes,
pour lequel les tensions d'électrodes d'au moins quatre et notamment d'au moins six et de préférence d'au moins huit phases d'alimentation sont utilisées lors de la détermination de la tension parasite.

4. Procédé selon l'une des revendications précédentes,
pour lequel les tensions d'électrode de vingt phases d'alimentation au maximum et notamment de seize phases d'alimentation au maximum et de préférence de douze phases d'alimentation au maximum sont utilisées lors de la détermination de la tension parasite.

5. Procédé selon l'une des revendications précédentes,
pour lequel le nombre de tensions d'électrodes prises en compte peut être adapté lors de la détermination de la tension parasite (StS).

6. Procédé selon l'une des revendications précédentes,
pour lequel la tension d'électrode numérisée par le premier convertisseur analogique/numérique (54.1) est acheminée au circuit de calcul (55).

7. Procédé selon l'une des revendications 1 à 6,
pour lequel la tension d'électrode délivrée par l'unité de sortie (51) et numérisée par un deuxième convertisseur analogique/numérique (54.2) est acheminée au circuit de calcul (55).

8. Procédé selon l'une des revendications précédentes,
pour lequel un signal de sortie du circuit de calcul numérique (55), lequel signal représente la tension parasite, est appliqué à un convertisseur numérique/analogique (56), lequel convertisseur numérique/analogique est raccordé à la deuxième entrée de signal de l'unité d'addition/de soustraction (52).

9. Débitmètre électromagnétique (1) conçu pour la mise en oeuvre du procédé selon l'une des revendications précédentes, lequel débitmètre comprend :
un tube de mesure (10) ;
un système magnétique (20) avec au moins un système de bobines (21) destiné à générer un champ magnétique dans le tube de mesure (10), le champ magnétique étant pour l'essentiel perpendiculaire à un axe de tube de mesure ;
au moins deux électrodes de mesure (31, 32) destinées à prélever une tension électrique d'électrode dépendant du débit, laquelle tension est induite par le champ magnétique ;
une unité de sortie (51) destinée à mesurer et délivrer la tension d'électrode prélevée par les électrodes de mesure ;
un circuit électronique de mesure/d'exploitation (50), lequel est conçu pour exploiter le système magnétique (20) et évaluer la tension d'électrode pour déterminer des valeurs mesurées de débit,
le circuit électronique de mesure/d'exploitation (50) présentant un circuit de calcul numérique (55), lequel est conçu pour déterminer une tension parasite,
le circuit de mesure/d'exploitation (50) étant conçu pour compenser la tension parasite,
le circuit de calcul numérique (55) comprenant un filtre passe-bas (55.1),
le circuit de calcul numérique (55) comprenant une unité d'addition/de soustraction (52) et étant conçu pour effectuer la compensation de la tension d'électrode avant d'acheminer la tension d'électrode à l'unité d'amplification (53) au moyen de l'unité d'addition/de soustraction (52), l'unité d'addition/de soustraction (52) comprenant une première entrée de signal pour la tension d'électrode et une deuxième entrée de signal pour une valeur de la tension parasite déterminée.

10. Débitmètre électromagnétique (1) selon la revendication 9,
pour lequel le circuit de mesure/d'exploitation (50) comprend une unité d'amplification (53) ainsi qu'un premier convertisseur analogique/numérique (54.1),
l'unité d'amplification (53) étant conçue pour amplifier la tension d'électrode et l'acheminer au premier convertisseur analogique/numérique (54.1),
et le premier convertisseur analogique/numérique (54.1) étant conçu pour numériser la tension d'électrode et l'acheminer au circuit de calcul numérique (55) ainsi qu'à un dispositif de traitement des données de mesure (58).

11. Débitmètre électromagnétique (1) selon la revendication 9,
pour lequel le circuit de mesure/d'exploitation (50) comprend une unité d'amplification (53) ainsi qu'un premier convertisseur analogique/numérique (54.1) et un deuxième convertisseur analogique/numérique (54.2),
l'unité d'amplification (53) étant conçue pour amplifier la tension d'électrode et l'acheminer au premier convertisseur analogique/numérique (54.1),
et le premier convertisseur analogique/numérique (54.1) étant conçu pour numériser la tension d'électrode et l'acheminer à un dispositif de traitement des données de mesure (58),
le deuxième convertisseur analogique/numérique (54.2) étant conçu pour numériser la tension d'électrode délivrée par l'unité de sortie (51) et l'acheminer au circuit de calcul numérique.

12. Débitmètre électromagnétique (1) selon la revendication 11,
pour lequel le circuit de mesure/d'exploitation comprend en outre un convertisseur numérique/analogique (56) et de préférence un atténuateur (57), lesquels sont disposés entre l'unité d'addition/de soustraction (52) et le circuit de calcul.

13. Débitmètre électromagnétique (1) selon l'une des revendications 9 à 12,
pour lequel le circuit de mesure/d'exploitation (50) comprend une unité supérieure (59) conçue pour commander l'amplification de la tension d'électrode par l'unité d'amplification (53) et l'atténuation de la tension parasite par l'atténuateur (57),
l'unité supérieure (59) étant en outre conçue pour transmettre le facteur d'amplification au circuit de calcul numérique (55) ainsi qu'au dispositif de traitement des données de mesure (58).
